# EUROPÄISCHE PATENTSCHRIFT

(11) **EP 0 732 075 B1**
(45) Veröffentlichungstag und Bekanntmachung des Hinweises auf die Patenterteilung: **13.01.1999**
(21) Anmeldenummer: 95810304.6
(22) Anmeldetag: 08.05.1995
(51) Int. Cl.: A47J 43/00

(54) **Hacker**
Mincing device
Dispositif à couper

(30) Priorität: 15.03.1995 CH 737/95
(43) Veröffentlichungstag der Anmeldung: 18.09.1996
(73) Patentinhaber: Zyliss Haushaltwaren AG, CH-3250 Lyss (CH)
(72) Erfinder: Moor, Roland, CH-3250 Lyss (CH)
(74) Vertreter: BOVARD AG - Patentanwälte

(56) Entgegenhaltungen:
- US-A- 1 686 280
- US-A- 3 587 692
- US-A- 3 933 315
- US-A- 4 572 444
- US-A- 4 967 970
- SOVIET PATENTS ABSTRACTS, PQ Sektion, Woche 9335, 20. Oktober 1993 DERWENT PUBLICATIONS LTD., London; & SU-A-1755 788 (LEON)

## Beschreibung

Die Erfindung bezieht sich auf einen Hacker mit einem Oberteil, einem lösbar daran befestigten Unterteil und einem mit mindestens einem Messer verbundenen, axial verschiebbaren Betätigungsteil, wobei der Unterteil mit einem entfernbaren Becher versehen ist, welcher einen Boden und eine daran anschliessende zylinderförmige Becherwand aufweist.

Aus der US-Patentschrift 3 587 692 ist ein Hacker mit einem Oberteil, einem lösbar daran befestigten Unterteil und einem mit mindestens einem Messer verbundenen, axial verschiebbaren Betätigungsteil vorbekannt, wobei der Unterteil mit einem entfernbaren Becher versehen ist. Die Befestigung des Bechers am Hacker ist kann verbessert werden.

Der Nahrungsmittelhacker gemäss der US-Patentschrift 3 933 315 weist einen zweiteilig ausgebildeten Becher auf. Der Becher besteht aus einem unteren Gehäuse und weist ein mit diesem verbundenes Schneidbrett auf. Zum Bilden des Bechers muss das Schneidbrett auf das untere Gehäuse aufgesteckt werden.

Bei der Hackvorrichtung gemäss der US-Patentschrift 4 967 970 ist eine Hackplatte auf den unteren Teil der Hackvorrichtung aufgesetzt. Es ist kein entfernbarer Becher vorhanden.

Es ist eine Aufgabe der vorliegenden Erfindung, einen Hacker derart zu verbessern, dass die erwähnten Nachteile vermieden werden.

Dies wird erfindungsgemäss dadurch erzielt, dass der Boden des Bechers in seinem äusseren Bereich mit einem parallel zur Becherwand verlaufenden Rand versehen ist, der Mittel zum lösbaren Befestigen des Bechers am Unterteil des Hackers aufweist

Im folgenden wird anhand der beiliegenden Zeichnung ein Ausführungsbeispiel sowie dessen Verwendung näher beschrieben. Es zeigen
Fig. 1 eine Ansicht eines Ausführungsbeispieles des Hackers, teilweise geschnitten,
Fig. 2 den Hackbecher mit aufgesetztem Deckel im Schnitt.

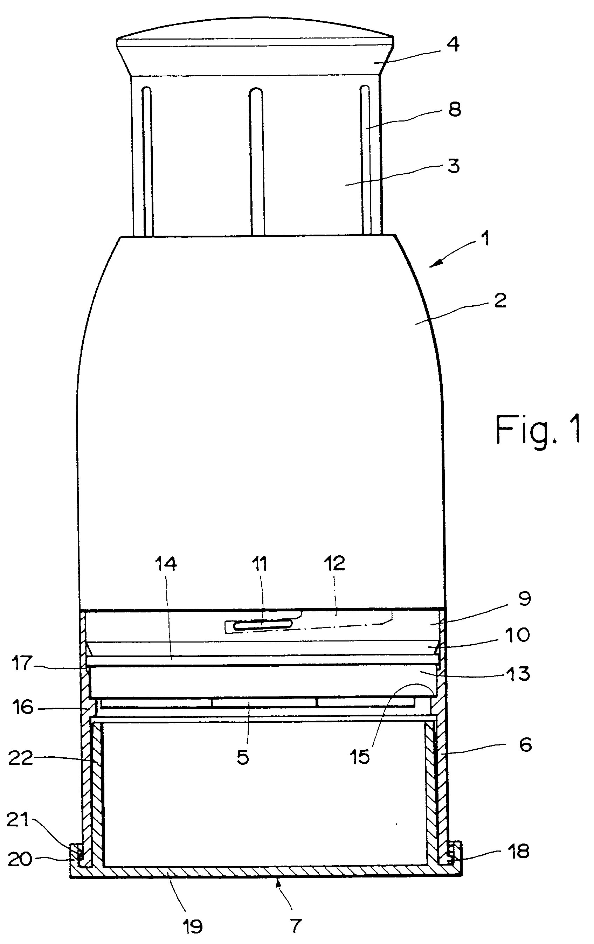

Der Hacker 1 zum Hacken beispielsweise von Gemüse, gemäss dem in Fig. 1 dargestellten Ausführungsbeispiel der Erfindung, umfasst einen Oberteil 2, einen in diesem axial verschiebbaren zylinderförmigen Betätigungsteil 3 mit einem Kopf 4, ein mit dem Teil 3 verbundenes Messer 5, einen auf den Oberteil aufsetzbaren Unterteil 6 sowie einen auf den Unterteil 6 aufsetzbaren Hackbecher 7. Durch Nuten 8 im zylinderförmigen Teil 3 ist derselbe derart im Oberteil 2 geführt, dass beim Schlagen auf den Kopf das Messer 5 eine axiale Bewegung und eine Drehbewegung ausführt. Der Oberteil 2 ist in seinem unteren Bereich 9 zum Aufsetzen des Unterteils 6 abgesetzt ausgebildet. Der untere Bereich endet in einem konischen Teil 10 zum erleichterten Aufsetzen des Unterteils 6. Der untere Bereich 9 ist mit zwei einander gegenüberliegenden länglichen Nocken 11 zwecks Bildung eines Bajonettverschlusses versehen. Der Unterteil 6 ist in seinem oberen Bereich mit entsprechenden Nuten 12 zur Bildung des Bajonettverschlusses zwischen Oberteil 2 und Unterteil 6 versehen. Auf das Messer 5 aufgesetzt ist ein, eine dem Messer 15 entsprechende Öffnung enthaltender Abstreifer 13 mit einem oberen abstehenden Rand 14. Der untere Rand 15 des Abstreifers 13 liegt auf einem nach innen abstehenden Ansatz 16 des Unterteils 6 auf. Etwas unterhalb des oberen Randes 14 weist die Wand des Unterteils 6 einen Absatz 17 auf, da der Abstreifer 13 und der untere Bereich 9 des Oberteils 2 nicht denselben Durchmesser aufweisen. Der Unterteil 6 ist an seinem unteren Ende mit einem nach aussen abstehenden Ansatz 18 versehen. Der Hackbecher 7 weist einen Boden 19 mit einem in seinem äusseren Bereich aussen am Unterteil 6 nach oben abstehenden Rand 20 auf. Der Rand 20 ist an der Innenseite mit Noppen 21 versehen, die mit dem Ansatz 18 einen Schnappverschluss bilden. Vom Boden 19 aus erstreckt sich an der Innenseite des Unterteils eine zylinderförmige Becherwand 22 nach oben. Die Becherwand 22 reicht bis in den Bereich des Ansatzes 16.

Beim Hacken bleibt das Hackgut im Hackbecher 7. Nach dem Hackvorgang kann der Hackbecher 7 mit dem Hackgut vom Unterteil 6 des Hackers entfernt werden. Bei einem bekannten Hacker entfernt sich beim Abheben des Unterteils von der Unterlage das Hackgut vom Unterteil weg und muss zum Weiterhacken wieder unter den Unterteil verbracht werden.

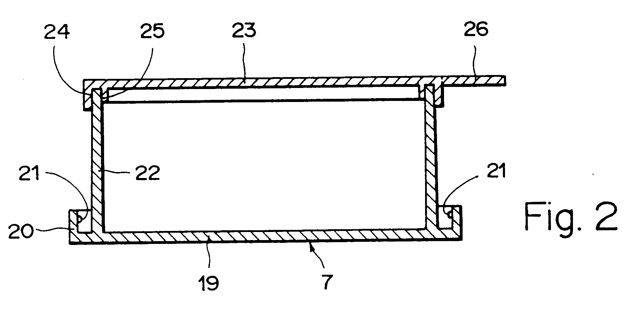

Fig. 2 zeigt den Hackbecher 7 mit aufgesetztem Deckel 23. Der Deckel 23 weist aussen einen breiteren Rand 24 und mit Abstand davon nach innen angeordnet einen schmäleren Rand 25 auf. Mit den beiden Rändern 24 und 25 wird der Deckel 23 auf die zylinderförmige Becherwand 22 des Hackbechers 7 aufgesetzt. Im weiteren weist der Deckel zum Abheben desselben vom Hackbecher einen Lappen 26 auf. Das restliche Hackgut kann im Hackbecher 7 mit aufgesetztem Deckel 23 im Kühlschrank aufbewahrt werden.

Bei einer in der Zeichnung nicht dargestellten Ausführungsform weist der Unterteil in seinem unteren Bereich nicht einen Ansatz, sondern ein Gewinde zum lösbaren Befestigen des Bechers auf. Der im äusseren Bereich des Bodens des Bechers aussen am Unterteil nach oben abstehende Rand weist nicht Noppen auf, sondern ist auf der Innenseite mit einem Gewinde versehen.

## Patentansprüche

1. Hacker mit einem Oberteil (2), einem lösbar daran befestigten Unterteil (6), und einem mit mindestens einem Messer (5) verbundenen, axial verschiebbaren Betätigungsteil (3, 4), wobei der Unterteil (6) mit einem entfernbaren Becher (7) versehen ist, welcher einen Boden (19) und eine daran anschliessende zylinderförmige Becherwand (22) aufweist, dadurch gekennzeichnet, dass der Boden (19) des Bechers (7) in seinem äusseren Bereich mit einem parallel zur Becherwand (22) verlaufenden Rand (20) versehen ist, der Mittel zum lösbaren Befestigen des Bechers (7) am Unterteil (6) des Hackers aufweist.

2. Hacker nach Patentanspruch 1, dadurch gekennzeichnet, dass der Betätigungsteil (3, 4) axial verschiebbar und verdrehbar ist.

3. Hacker nach Patentanspruch 1 oder 2, dadurch gekennzeichnet, dass der Unterteil (6) in seinem unteren Bereich mit Mitteln zum lösbaren Befestigen des Bechers (7) versehen ist.

4. Hacker nach Patentanspruch 3, dadurch gekennzeichnet, dass die Mittel als erster Ansatz (18) ausgebildet sind.

5. Hacker nach Patentanspruch 3, dadurch gekennzeichnet, dass die Mittel als Gewinde ausgebildet sind.

6. Hacker nach einem der vorangehenden Patentansprüche, dadurch gekennzeichnet, dass der Unterteil (6) mit einem zweiten Ansatz (16) zur Auflage eines Abstreifers (13) versehen ist.

7. Hacker nach einem der vorangehenden Patentansprüche, dadurch gekennzeichnet, dass der Oberteil (2) in seinem unteren Bereich (9) mit mindestens zwei Nocken (11) und der Unterteil (6) in seinem oberen Bereich mit mindestens zwei Nuten (12) versehen ist.

8. Hacker nach einem der vorangehenden Patentansprüche, dadurch gekennzeichnet, dass die Mittel am Rand (20) als Noppen (21) ausgebildet sind.

9. Hacker nach einem der vorangehenden Patentansprüche 1-7, dadurch gekennzeichnet, dass die Mittel am Rand (20) als Gewinde ausgebildet sind.

10. Hacker nach einem der vorangehenden Patentansprüche 6-9, gekennzeichnet durch einen auf dem unteren Bereich (9) des Oberteils (2) und dem zweiten Ansatz (16) des Unterteils (6) aufgesetzten Abstreifer (13).

11. Hacker nach Patentanspruch 10, dadurch gekennzeichnet, dass der obere Rand (14) des Abstreifers (13) und der untere Bereich (9) des Oberteils (2) mit Mitteln zum Bilden eines Verschlusses versehen sind.

12. Becher (7) für einen Hacker nach einem der vorangehenden Patentansprüche, mit einem Boden (19) und einer daran anschliessenden zylinderförmigen Becherwand (22), dadurch gekennzeichnet, dass der Boden (19) des Bechers in seinem äusseren Bereich mit einem parallel zur Becherwand (22) verlaufenden Rand (20) versehen ist, der Mittel zum lösbaren Befestigen des Bechers am Unterteil des Hackers aufweist.

13. Becher nach Patentanspruch 12, dadurch gekennzeichnet, dass die Mittel als Noppen (21) ausgebildet sind.

14. Becher nach Patentanspruch 12, dadurch gekennzeichnet, dass die Mittel als Gewinde ausgebildet sind.

## Claims

1. Chopper with an upper part (2), a lower part (6) detachably fastened thereto, and an axially displaceable actuation part (3, 4) connected to at least one blade (5), the lower part (6) being provided with a removable cup (7) which has a floor (19) and a cylindrical cup wall (22) connected thereto, characterised in that the floor (19) of the cup (7) is provided in its outer region with a rim (20) running parallel to the cup wall (22), which rim has means for detachable fastening of the cup (7) to the lower part (6) of the chopper.

2. Chopper according to claim 1, characterised in that the actuation part (3, 4) is axially displaceable and rotatable.

3. Chopper according to claim 1 or 2, characterised in that the lower part (6) is provided with means in its lower area for detachably fastening the cup (7).

4. Chopper according to claim 3, characterised in that the means are designed as a first projection (18).

5. Chopper according to claim 3, characterised in that the means are designed as a screw thread.

6. Chopper according to one of the preceding claims, characterised in that the lower part (6) is provided with a second projection (16) for supporting a stripper (13).

7. Chopper according to one of the preceding claims, characterised in that the upper part (2) is provided in its lower area (9) with at least two tabs (11) and the lower part (6) is provided in its upper area with at least two grooves (12).

8. Chopper according to one of the preceding claims, characterised in that the means on the rim (20) are designed as nubs (21).

9. Chopper according to one of the preceding claims 1 to 7, characterised in that the means on the rim (20) are designed as a screw thread.

10. Chopper according to one of the preceding claims 6 to 9, characterised characterised by a stripper (13) placed upon the lower area (9) of the upper part (2) and the second projection (16) of the lower part (6).

11. Chopper according to claim 10, characterised in that the upper rim (14) of the stripper (13) and the lower area (9) of the upper part (2) are provided with means to form a closure.

12. Cup (7) for a chopper according to one of the preceding claims, with a floor (19) and a cylindrical cup wall (22) connecting thereto, characterised in that the floor (19) of the cup is provided in its outer region with a rim (20) running parallel to the cup wall (22), which rim has means for detachable fastening of the cup to the lower part of the chopper.

13. Cup according to claim 12, characterised in that the means are designed as nubs (21).

14. Cup according to claim 12, characterised in that the means are designed as a screw thread.

## Revendications

1. Dispositif de coupe avec une partie supérieure (2), une partie inférieure (6) pouvant y être fixée de manière amovible, et une partie d'actionnement (3, 4) déplaçable axialement reliée à au moins un couteau (5), la partie inférieure (6) étant munie d'un récipient (7) amovible, lequel comprend un fond (19) et une paroi de récipient (22) de forme cylindrique qui lui est attachée, caractérisé en ce que le fond (19) du récipient (7) est muni, dans sa région extérieure, d'une bordure (20) disposée parallèlement à la paroi de récipient (22) comprenant des moyens aptes à fixer de manière démontable le récipient (7) à la partie inférieure (6) du dispositif de coupe.

2. Dispositif de coupe selon la revendication 1, caractérisé en ce que la partie d'actionnement (3, 4) est déplaçable axialement et en rotation.

3. Dispositif de coupe selon l'une des revendications 1 ou 2, caractérisé en ce que la partie inférieure (6) est munie de moyens dans sa région inférieure, aptes à fixer de manière démontable le récipient (7).

4. Dispositif de coupe selon la revendication 3, caractérisé en ce que les moyens sont constitués d'un premier épaulement (18).

5. Dispositif de coupe selon la revendication 3, caractérisé en ce que les moyens sont constitués d'un filetage.

6. Dispositif de coupe selon l'une des revendications précédentes, caractérisé en ce que la partie inférieure (6) est munie d'un deuxième épaulement (16) pour supporter une séparation (13).

7. Dispositif de coupe selon l'une des revendications précédentes, caractérisé en ce que la partie supérieure (2) est munie dans sa région inférieure (9) d'au moins deux saillies (11) alors que la partie inférieure (6) est munie dans sa région supérieure d'au moins deux rainures (12).

8. Dispositif de coupe selon l'une des revendications précédentes, caractérisé en ce que les moyens sur la bordure (20) sont formés de boutons (21).

9. Dispositif de coupe selon l'une des revendications 1 à 7, caractérisé en ce que les moyens sur la bordure (20) sont formés d'un filetage.

10. Dispositif de coupe selon l'une des revendications 6 à 9, caractérisé en ce qu'une séparation (13) est superposée à la région inférieure (9) de la partie supérieure (2) et au deuxième épaulement (16) de la partie inférieure (6).

11. Dispositif de coupe selon la revendication 10, caractérisé en ce que la bordure supérieure (14) de la séparation (13) et la région inférieure (9) de la partie supérieure (2) sont munies de moyens de fermeture.

12. Récipient (7) pour un dispositif de coupe selon l'une des revendications précédentes, avec un fond (19) et une paroi de récipient (22) de forme cylindrique qui lui est attachée, caractérisé en ce que le fond (19) du récipient est muni, dans sa région extérieure, d'une bordure (20) disposée parallèlement à la paroi de récipient (22) comprenant des moyens aptes à fixer de manière démontable le récipient à la partie inférieure du dispositif de coupe.

13. Récipient selon la revendication 12, caractérisé en ce que les moyens sont formés de boutons (21).

14. Récipient selon la revendication 12, caractérisé en ce que les moyens sont formés d'un filetage.
